# FASCICULE DE BREVET EUROPEEN

(11) **EP 1 753 984 B1**
(45) Date de publication et mention de la délivrance du brevet: **30.09.2009**
(21) Numéro de dépôt: 05766702.4
(22) Date de dépôt: 26.05.2005
(51) Int. Cl.: F16H 61/14, F16H 59/46

(54) **DISPOSITIF ET PROCEDE DE COMMANDE D'UNE BOITE DE VITESSES AUTOMATISEE POUR PILOTER LES PONTAGES ET DEPONTAGES.**
VORRICHTUNG UND VERFAHREN ZUR STEUERUNG EINES AUTOMATIKGETRIEBES ZUR STEUERUNG VON SPERRUNG UND ENTSPERRUNG
DEVICE AND METHOD FOR CONTROL OF AN AUTOMATIC GEARBOX FOR CONTROL OF LOCK-UP AND LOCK-UP RELEASE

(30) Priorité: 28.05.2004 FR 0405775
(43) Date de publication de la demande: 21.02.2007
(73) Titulaire: RENAULT S.A.S., 92100 Boulogne Billancourt (FR)
(72) Inventeur: TURPIN, Thomas, F-91400 ORSAY (FR); CANIEZ, Laurent, F-75015 PARIS (FR)
(86) Numéro de dépôt international: PCT/FR2005/050379
(87) Numéro de publication internationale: WO 2005/118328

(56) Documents cités:
- DE-A- 10 242 821
- US-A- 5 547 438
- US-A- 5 989 156
- US-A- 6 042 507
- US-B1- 6 449 550
- US-B1- 6 468 183

## Description

La présente invention concerne un dispositif et un procédé de commande des transmissions automatisées des groupes moto-propulseurs de véhicules automobiles.

Cette invention se rapporte plus particulièrement à un véhicule automobile comportant une boîte de vitesses à changement de rapports automatisée comportant un convertisseur de couple hydraulique et un dispositif de verrouillage tel qu'un lock-up, une unité de pilotage du moteur et une unité de pilotage de la boîte de vitesses. Les unités de pilotage du moteur et de la boîte de vitesses peuvent s'échanger des informations, notamment l'unité de pilotage du moteur peut transmettre à l'unité de pilotage de la boîte de vitesses une information représentative de la demande de couple du conducteur ainsi que la valeur réelle du couple fourni et l'unité de pilotage de la boite de vitesses peut transmettre au moteur des consignes de couple susceptibles de modifier le pilotage du moteur.

L'invention se propose de rendre possible ou d'améliorer les pontages, notamment ceux effectués en mode rétro (c'est-à-dire avec un régime de rotation de la turbine du convertisseur supérieur au régime de rotation du moteur), les relevés de pied (c'est-à-dire le relâchement de la pédale d'accélérateur) pendant les pontages et les dépontages.

Les boîtes de vitesses automatisées comportant un convertisseur de couple possèdent généralement un dispositif hydraulique de pontage qui permet de solidariser l'arbre moteur de l'arbre de la turbine du convertisseur. Les techniques de pontage s'appuient généralement sur un pilotage de la pression dans la chambre du lock-up (dispositif de verrouillage). La pression nécessaire au verrouillage dépend du couple fourni par le moteur, du régime moteur et des caractéristiques du convertisseur de couple. Les caractéristiques du convertisseur ne sont pas les mêmes si le convertisseur est en mode tirage (le régime de rotation de l'entrée du convertisseur, équivalent au régime du moteur, est supérieur au régime de rotation de la sortie du convertisseur, appelé régime turbine) ou en mode rétro (le régime de rotation du moteur, est inférieur au régime turbine). Lorsque le convertisseur est en mode rétro, la pression nécessaire pour verrouiller le dispositif de verrouillage est beaucoup plus élevée qu'en mode tirage, au point qu'il n'est généralement pas possible de ponter dans ces conditions. Cela a pour inconvénient de rendre impossible d'effectuer des pontages lorsque le conducteur n'appuie pas sur l'accélérateur, notamment dans les descentes ou lors de freinages, ce qui occasionne une perte de frein moteur et une dégradation de la consommation. Cela réduit de plus les possibilités de dépontages lors de certains passages de vitesses, de peur de ne pouvoir reponter ensuite.

Généralement, l'unité de pilotage des boîtes de vitesses n'envoie pas de consigne de couple à l'unité de pilotage du moteur lors des pontages ou des dépontages, ou alors seulement dans certains cas bien définis. Du document US 6 449 550 est connu un système générique pour amortir les pontages en réduisant le couple moteur en fonction du glissement entre la pompe et la turbine.

Le but de la présente invention est de permettre d'effectuer des pontages depuis n'importe quel point de fonctionnement, notamment lorsque le convertisseur de couple est en mode rétro (régime de rotation de la turbine du convertisseur supérieur au régime de rotation du moteur). Un autre but est aussi d'améliorer la qualité des pontages lorsque le couple conducteur (couple demandé par le conducteur) diminue fortement pendant le pontage, ainsi que la qualité des dépontages.

La caractéristique principale de l'invention est de proposer un pilotage spécifique du couple moteur par l'unité de contrôle de la boîte de vitesses lors des pontages et dépontages du dispositif de verrouillage (lock-up).

L'invention vise ainsi un dispositif de commande d'une boîte de vitesses automatisée accouplée au moteur d'un véhicule automobile par un convertisseur de couple comportant un dispositif de verrouillage permettant de rendre l'arbre de sortie du moteur solidaire de l'arbre d'entrée de la boîte de vitesses automatisée pour réaliser un pontage et inversement pour réaliser un dépontage, le dispositif comprenant en outre une unité de pilotage du moteur adaptée pour transmettre au moteur un ordre tel qu'une demande de couple et une unité de pilotage de la boite de vitesses adaptée pour transmettre à l'unité de pilotage du moteur un ordre tel qu'une consigne de couple, ladite demande de couple étant fonction du couple demandé par le conducteur et de la consigne de couple.

Suivant l'invention, ce dispositif de commande est caractérisé en ce que l'unité de pilotage de la boîte de vitesses est adaptée pour transmettre à l'unité de pilotage du moteur une consigne de couple fonction du glissement et de la valeur du couple demandé par le conducteur du véhicule et telle qu'elle permet au régime du moteur de devenir proche du régime de la turbine du convertisseur de couple pour qu'un pontage ou un dépontage puisse être exécuté.

Ainsi, grâce au dispositif selon l'invention, les pontages et les dépontages deviennent possibles dans tous les cas, même lorsque le couple demandé par le conducteur varie fortement pendant les pontages ou dépontages.

Pour exécuter un pontage lorsque le régime de la turbine du convertisseur est supérieur à celui du moteur, l'unité de pilotage de la boîte de vitesses est adaptée pour transmettre à l'unité de pilotage du moteur une consigne de couple supérieure au couple demandé par le conducteur du véhicule pour que le régime du moteur devienne proche du régime de la turbine du convertisseur.

Pour exécuter un pontage lors d'une diminution rapide du couple du moteur due à un relâchement par le conducteur de la pédale d'accélérateur, l'unité de pilotage de la boîte de vitesses transmet à l'unité de pilotage du moteur une consigne de couple pour ralentir la vitesse de diminution du couple.

Pour exécuter un dépontage lorsque le moteur est en coupure d'injection, l'unité de pilotage de la boîte de vitesses est adaptée pour transmettre à l'unité de pilotage du moteur une consigne de couple supérieure au couple demandé par le conducteur du véhicule pour que le dépontage ne s'effectue pas alors que le moteur est en coupure d'injection.

Pour exécuter un dépontage lors d'une diminution rapide du couple du moteur due à un relâchement par le conducteur de la pédale d'accélérateur, l'unité de pilotage de la boîte de vitesses est adaptée pour transmettre à l'unité de pilotage du moteur une consigne de couple pour ralentir la vitesse de diminution du couple.

De préférence, l'unité de pilotage de la boîte de vitesses comprend des moyens pour régler la pression hydraulique appliquée au dispositif de verrouillage et de déverrouillage, lors de l'exécution des pontages et des dépontages.

Cette disposition permet de réaliser des pontages et des dépontages en douceur, sans à-coups.

Dans une version préférée de l'invention, lors des pontages ou des dépontages, l'unité de pilotage de la boîte de vitesses est adaptée pour comparer le couple demandé par le conducteur à un couple cible et comparer la différence entre le régime du moteur et le régime de la turbine à un seuil et pour transmettre à l'unité de pilotage du moteur une consigne de couple pour que le couple moteur rejoigne progressivement le couple cible et que le régime du moteur rejoigne progressivement celui de la turbine.

L'unité de pilotage de la boîte de vitesses est adaptée pour déterminer le couple cible et le seuil de régime, en fonction du régime de la turbine, de la température de l'huile de la boîte de vitesses et du rapport de vitesses qui est engagé. Ce couple cible doit être choisi suffisamment bas pour que le conducteur ne ressente pas d'accélération intempestive du véhicule et suffisamment haut pour que, dans le cas d'un dépontage le régime moteur rejoigne le régime turbine et que dans le cas d'un dépontage l'injection du moteur puisse de nouveau avoir lieu. Ce couple cible peut être différent selon que l'on effectue un pontage ou un dépontage.

Selon un autre aspect de l'invention, le procédé de pilotage d'un pontage ou d'un dépontage dans une boîte de vitesses automatisée accouplée au moteur d'un véhicule automobile par un convertisseur de couple comportant un dispositif de verrouillage permettant de rendre l'arbre de sortie du moteur solidaire de l'arbre d'entrée de la boîte de vitesses automatisée pour réaliser un pontage et inversement pour réaliser un dépontage, et comportant en outre une unité de pilotage du moteur adaptée pour transmettre au moteur un ordre tel qu'une demande de couple et une unité de pilotage de la boîte de vitesses adaptée pour transmettre à l'unité de pilotage du moteur un ordre tel qu'une consigne de couple, ladite demande de couple étant fonction du couple demandé par le conducteur et de la consigne de couple, est caractérisé en ce que pour rendre un pontage ou un dépontage exécutable, l'unité de pilotage de la boîte de vitesses transmet à l'unité de pilotage du moteur une consigne de couple fonction du glissement et de la valeur du couple demandé par le conducteur du véhicule et telle qu'elle permet au régime du moteur de devenir proche du régime de la turbine du convertisseur de couple.

D'autres particularités et avantages de l'invention apparaîtront encore tout au long de la description ci-après.

Aux dessins annexés, donnés à titre d'exemples, non limitatifs :
- la figure 1 est le schéma général du dispositif de commande d'une boîte de vitesses automatisée selon l'invention,
- la figure 2 est un organigramme montrant les différentes étapes de fonctionnement du dispositif de commande dans le cas d'un pontage.
- la figure 3 est un organigramme montrant les différentes étapes de fonctionnement du dispositif de commande dans le cas d'un dépontage.

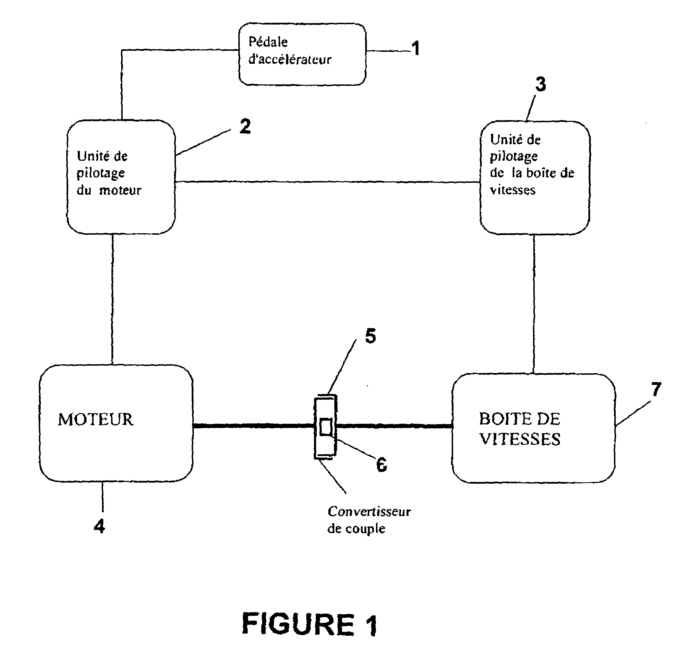

Comme représenté sur la figure 1, le moteur 4 est piloté par une unité de pilotage 2 et la boîte de vitesses 7 est pilotée par une unité de pilotage 3. Le conducteur du véhicule dispose d'un organe tel qu'une pédale d'accélérateur 1 sur lequel il agit pour commander le moteur 4 afin que ce dernier fournisse un certain couple dans le but d'obtenir une accélération du véhicule. La pédale d'accélérateur 1 envoie à l'unité de pilotage du moteur 2 un signal électrique représentant la position angulaire de la pédale. Cette position est transformée en demande de couple par l'unité de pilotage du moteur 2. L'unité de pilotage 2 agit sur le moteur 4 pour que celui-ci fournisse le couple attendu.

L'unité de pilotage 3 de la boîte de vitesses 7 peut transmettre un ordre de pilotage du moteur, telle qu'une consigne de couple, à l'unité de pilotage du moteur 2. La demande de couple envoyée au moteur par l'unité de pilotage du moteur 2 est fonction du couple demandé par le conducteur du véhicule et de la consigne de couple. La demande de couple envoyée au moteur par l'unité de pilotage du moteur 2 correspond soit au couple demandé par le conducteur du véhicule en l'absence de consigne de couple, soit à la consigne de couple transmise par l'unité de pilotage 3 de la boîte de vitesses.

L'élément de couplage 5 situé entre le moteur 4 et la boîte de vitesses automatisée 7 est un convertisseur de couple possédant un dispositif de verrouillage 6 (lock-up) permettant dans certains cas de fonctionnement de solidariser l'arbre moteur de l'arbre d'entrée de la boîte de vitesses, pour réaliser un pontage.

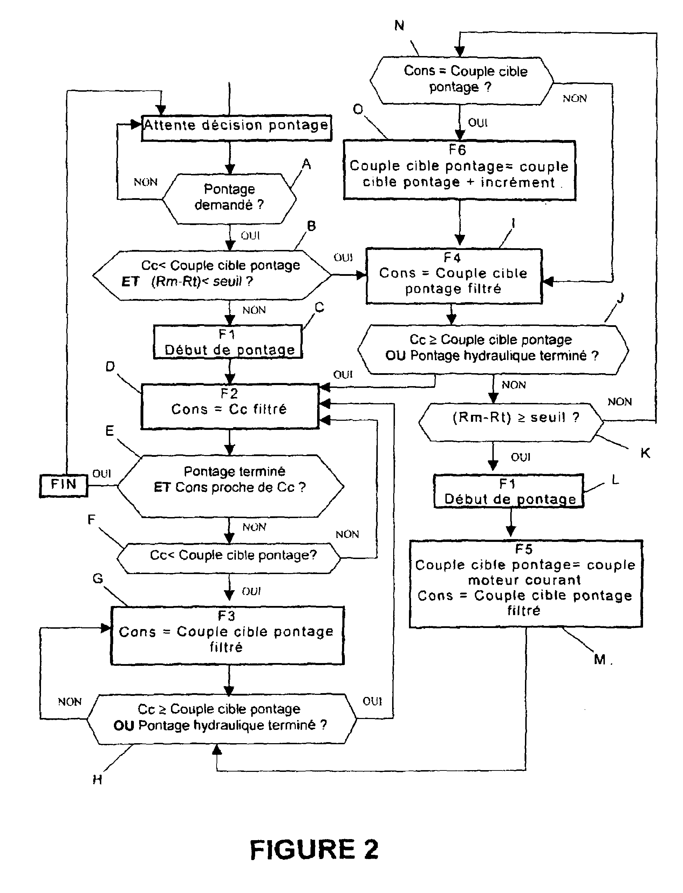

Le diagramme de la figure 2 décrit les différentes étapes de fonctionnement du dispositif de commande dans le cas d'un pontage. Le dispositif prévoit que l'unité de pilotage 3 de la boîte 7 transmette une consigne de couple à l'unité de pilotage 2 du moteur pendant toute la durée du pontage tel que décrit dans la figure 2.

Dans l'étape A, l'unité de pilotage 3 de la boîte de vitesses, détermine s'il y a lieu d'opérer un pontage. Dans la négative, aucune consigne de couple particulière n'est transmise à l'unité de pilotage 2 du moteur. Si un pontage est décidé, l'étape B est réalisée.

Dans l'étape B, l'unité de pilotage 3 teste si le couple représentatif de la volonté du conducteur (Cc) fourni par l'unité de pilotage 2 du moteur est inférieur à un couple minimum, appelé Couple cible pontage et si le régime de rotation du moteur est inférieur et éloigné du régime de rotation de la turbine (régime moteur (Rm) - régime turbine (Rt) <seuil). Le couple cible pontage et le seuil de régime sont déterminés par l'unité de pilotage 3 de la boîte en fonction de différents paramètres tels que le régime turbine, la température d'huile ou le rapport engagé. Si le test est négatif, l'étape C est directement appliquée, sinon c'est l'étape 1 qui est appliquée.

Dans l'étape C, le processus F1 est appliqué : la commande hydraulique du pontage est lancée en utilisant les stratégies de pontage classiques. Ces commandes se poursuivent indépendamment des consignes de couples transmises à l'unité de pilotage 2 du moteur. Une fois le pontage hydraulique lancé, l'étape D est appliquée.

Dans l'étape D, le processus F2 est appliqué : l'unité de pilotage 3 de la boîte envoie à l'unité de pilotage 2 du moteur une consigne de couple (Cons) qui rejoint le couple conducteur (Cc) par un filtrage adéquat pour par exemple ralentir le dynamisme de diminution du couple moteur lors d'un relevé de pied par rapport à la pédale d'accélérateur. Le processus F2 peut-être interrompu selon les résultats des tests des étapes E et F.

Dans l'étape E, l'unité de pilotage 3 de la boîte de vitesses teste si le pontage « hydraulique » en cours d'exécution est terminé et si la consigne de couple transmise à l'unité de pilotage 2 du moteur par l'unité de pilotage 3 de la boîte a rejoint de façon suffisamment proche le couple conducteur. Si oui, le pontage est considéré comme terminé et l'unité de pilotage 3 de la boîte de vitesses teste si un nouveau pontage est demandé (retour à l'étape A). Si le test est négatif, l'étape F est appliquée.

Dans l'étape F, l'unité de pilotage 3 de la boîte de vitesses teste si le couple conducteur est inférieur au couple cible pontage. Si non, l'étape D continue à s'effectuer. Si oui, l'étape G est appliquée.

Dans l'étape G, le processus F3 est appliqué : l'unité de pilotage 3 de la boîte envoie à l'unité de pilotage 2 du moteur une consigne de couple qui rejoint le couple cible pontage par un filtrage adéquat pour par exemple ralentir le dynamisme de diminution lors d'un relevé de pied par rapport à la pédale d'accélérateur. Le processus F3 peut-être interrompu selon le résultat du test de l'étape H.

Dans l'étape H, l'unité de pilotage 3 de la boîte de vitesses teste si le couple conducteur est supérieur ou égal au couple cible pontage ou si le pontage « hydraulique » est terminé. Si oui, l'étape D est de nouveau appliquée pour que la consigne de couple rejoigne le couple conducteur. Si non, il y a retour à l'étape G pour permettre au processus F3 de se poursuivre.

Dans l'étape 1, le processus F4 est appliqué : l'unité de pilotage 3 de la boîte envoie à l'unité de pilotage 2 du moteur une consigne de couple qui rejoint le couple cible pontage progressivement par un filtrage ou une rampe. Le processus F4 peut-être interrompu selon les résultats des tests des étapes J, K et N.

Dans l'étape J, l'unité de pilotage 3 de la boîte de vitesses teste si le couple conducteur est supérieur ou égal au couple cible pontage ou si le pontage «hydraulique» est terminé. Si oui, l'étape D est de nouveau appliquée pour que la consigne de couple rejoigne le couple conducteur. Si non, l'étape K est appliquée.

Dans l'étape K, l'unité de pilotage 3 de la boîte de vitesses teste si le régime de rotation du moteur est supérieur ou proche du régime de rotation de la turbine (régime moteur - régime turbine ≥ seuil). Si oui, l'étape L est appliquée, sinon c'est l'étape N qui est appliquée.

Dans l'étape L, le processus F1 est appliqué : la commande hydraulique du pontage est lancée en utilisant les stratégies de pontage classiques. Ces commandes se poursuivent indépendamment des consignes de couples transmises à l'unité de pilotage 2 du moteur. Une fois le pontage « hydraulique » lancé, l'étape M est appliquée.

Dans l'étape M, le test de l'étape K étant positif, le couple courant suffit pour que le régime moteur soit supérieur ou proche du régime turbine : le processus F5 s'applique. Selon ce processus, le couple cible pontage est figé au couple réel fourni par le moteur et la consigne de couple rejoint le couple cible pontage progressivement par un filtrage ou une rampe. Ensuite, l'étape H est de nouveau appliquée.

Dans l'étape N, l'unité de pilotage 3 de la boîte de vitesses teste si le couple moteur appliqué est égal ou proche du couple cible pour vérifier que le processus F4 est allé à son terme. Si le test est négatif, on revient à l'étape 1 pour poursuivre le processus F4. Si le test est positif, l'étape O est appliquée.

Dans l'étape O, le couple cible est insuffisant pour ramener le régime moteur au niveau du régime turbine (le test de l'étape K est négatif). Le processus F6 s'applique : le couple cible initial est augmenté d'un incrément déterminé par l'unité de pilotage 3 de la boîte. Cet incrément peut dépendre de plusieurs paramètres tels que la différence entre le régime moteur et le régime turbine par exemple. Une fois le couple cible augmenté, on revient à l'étape 1.

La description ci-dessus illustre un exemple de réalisation de l'invention appliqué au pontage. Toute autre technique de régulation du glissement entre le régime moteur et le régime turbine pendant le pontage peut être appliquée.

De même, on peut appliquer ce principe de pilotage pour les dépontages. Dans ce cas, l'unité de pilotage 3 de la boîte de vitesses peut transmettre à l'unité de pilotage 2 du moteur un ordre de pilotage selon lequel le couple est filtré en cohérence avec l'ouverture du lock-up 6 (dispositif de verrouillage). Elle pleut aussi transmettre une consigne de couple supérieure au couple conducteur pour gérer le réaccouplement du moteur de manière à ce qu'il n'interfère pas avec le dépontage.

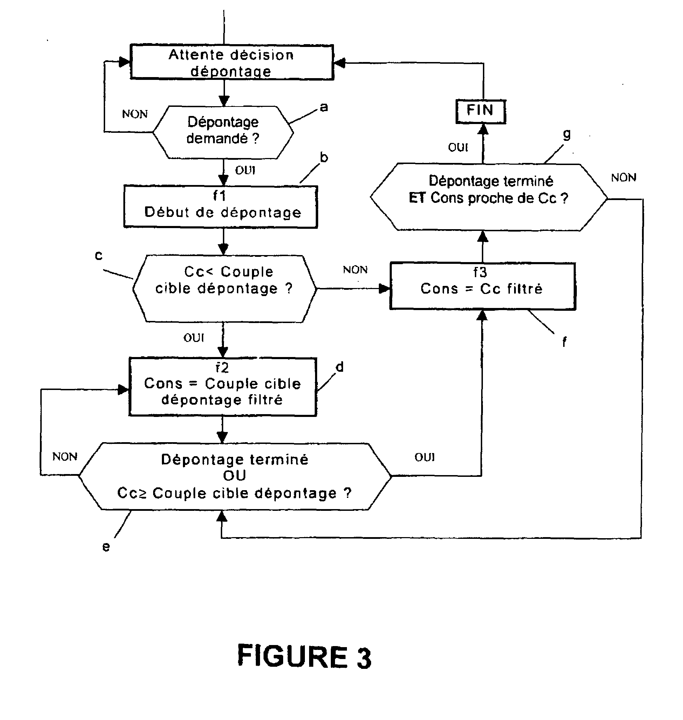

Le diagramme de la figure 3 décrit les différentes étapes de fonctionnement du dispositif de commande dans le cas d'un dépontage. Le dispositif prévoit que l'unité de pilotage 3 de la boîte 7 transmette une consigne de couple à l'unité de pilotage 2 du moteur pendant toute la durée du dépontage tel que décrit dans la figure 3.

Dans l'étape a, l'unité de pilotage 3, détermine s'il y a lieu d'opérer un dépontage. Dans la négative, aucune consigne de couple particulière n'est transmise à l'unité de pilotage du moteur. Si un dépontage est décidé, l'étape b est réalisée.

Dans l'étape b, le processus f1 est appliqué : la commande hydraulique du dépontage est lancée en utilisant les stratégies de dépontage classiques. Ces commandes se poursuivent indépendamment des consignes de couples transmises à l'unité de pilotage 2 du moteur. Une fois le dépontage « hydraulique » lancé, l'étape c est appliquée.

Dans l'étape c, l'unité de pilotage 3 teste si le couple représentatif de la volonté du conducteur (Cc) fourni par l'unité de pilotage 2 du moteur est inférieur à un couple minimum, appelé Couple cible dépontage. Le couple cible dépontage est déterminé par l'unité de contrôle 3 de la boîte en fonction de différents paramètres tels que le régime turbine, la température d'huile ou le rapport engagé. Si le test est négatif, l'étape f est directement appliquée, sinon c'est l'étape d qui est appliquée.

Dans l'étape d, le processus f2 est appliqué : l'unité de pilotage 3 de la boîte envoie à l'unité de pilotage 2 du moteur une consigne de couple qui rejoint le couple cible dépontage progressivement par un filtrage ou une rampe. Le processus f2 peut-être interrompu selon les résultats du test de l'étape e.

Dans l'étape e, l'unité de pilotage 3 teste si le couple représentatif de la volonté du conducteur est supérieur ou égal au couple cible dépontage ou si le dépontage « hydraulique » est terminé. Si le test est positif, l'étape f est directement appliquée, sinon c'est l'étape d qui est appliquée et le processus f2 continue à s'appliquer.

Dans l'étape f, le processus f3 est appliqué : l'unité de pilotage 3 de la boîte envoie à l'unité de pilotage 2 du moteur une consigne de couple qui rejoint le couple conducteur par un filtrage adéquat pour par exemple ralentir le dynamisme de diminution du couple moteur lors d'un relevé de pied par rapport à la pédale d'accélérateur. Le processus f3 peut-être interrompu selon les résultats des tests des étapes g et e.

Dans l'étape g, l'unité de pilotage 3 de la boîte de vitesses teste si le dépontage « hydraulique » est terminé et si la consigne de couple transmise à l'unité de pilotage 2 du moteur par l'unité de pilotage 3 de la boîte a rejoint de façon suffisamment proche le couple conducteur. Si oui, le dépontage est considéré comme terminé et l'unité de pilotage 3 de la boîte de vitesses teste si un nouveau dépontage est demandé (retour à l'étape a). Si le test est négatif, l'étape e est appliquée.

## Revendications

1. Dispositif de commande d'une boîte de vitesses automatisée (7) accouplée au moteur (4) d'un véhicule automobile par un convertisseur de couple (5) comportant un dispositif de verrouillage (6) permettant de rendre l'arbre de sortie du moteur (4) solidaire de l'arbre d'entrée de la boîte de vitesses automatisée (7) pour réaliser un pontage et inversement pour réaliser un dépontage, le dispositif comprenant en outre une unité de pilotage (2) du moteur adaptée pour transmettre au moteur (4) un ordre tel qu'une demande de couple et une unité de pilotage (3) de la boite de vitesses (7) adaptée pour transmettre à l'unité de pilotage (2) du moteur un ordre tel qu'une consigne de couple, ladite demande de couple étant fonction du couple demandé par le conducteur et de ladite consigne de couple, **caractérisé en ce que** lors des pontages ou des dépontages, l'unité de pilotage (3) de la boîte de vitesses est adaptée pour comparer le couple demandé par le conducteur à un couple cible et comparer la différence entre le régime du moteur (4) et le régime de la turbine du convertisseur de couple à un seuil et pour transmettre à l'unité de pilotage (2) du moteur (4) une consigne de couple pour que le couple moteur rejoigne progressivement le couple cible et que le régime du moteur (4) rejoigne progressivement celui de la turbine.

2. Dispositif de commande selon la revendication 1, **caractérisé en ce que** pour exécuter un pontage lorsque le régime de la turbine du convertisseur (5) est supérieur à celui du moteur (4), l'unité de pilotage (3) de la boîte de vitesses est adaptée pour transmettre à l'unité de pilotage (2) du moteur une consigne de couple supérieure au couple demandé par le conducteur du véhicule pour que le régime du moteur (4) devienne proche du régime de la turbine du convertisseur (5).

3. Dispositif de commande selon la revendication 1, **caractérisé en ce que** pour exécuter un pontage lors d'une diminution rapide du couple du moteur due à un relâchement par le conducteur de la pédale d'accélérateur (1), l'unité de pilotage (3) de la boîte de vitesses (7) transmet à l'unité de pilotage (2) du moteur une consigne de couple pour ralentir la vitesse de diminution du couple.

4. Dispositif de commande selon la revendication 1, **caractérisé en ce que** pour exécuter un dépontage lorsque le moteur (4) est en coupure d'injection, l'unité de pilotage (3) de la boîte de vitesses est adaptée pour transmettre à l'unité de pilotage (2) du moteur une consigne de couple supérieure au couple demandé par le conducteur du véhicule pour que le dépontage ne s'effectue pas alors que le moteur est en coupure d'injection.

5. Dispositif de commande selon la revendication 1, **caractérisé en ce que** pour exécuter un dépontage lors d'une diminution rapide du couple du moteur due à un relâchement par le conducteur de la pédale d'accélérateur, l'unité de pilotage (3) de la boîte de vitesses est adaptée pour transmettre à l'unité de pilotage (2) du moteur une consigne de couple pour ralentir la vitesse de diminution du couple.

6. Dispositif de commande selon l'une des revendications 1 à 5, **caractérisé en ce que** l'unité de pilotage (3) de la boîte de vitesses comprend des moyens pour régler la pression hydraulique appliquée au dispositif (6) de verrouillage et de déverrouillage, lors de l'exécution des pontages et des dépontages.

7. Dispositif de commande selon l'une des revendications 1 à 6, **caractérisé en ce que** l'unité de pilotage (3) de la boîte de vitesses (7) est adaptée pour déterminer le couple cible et le seuil de régime, en fonction du régime de la turbine, de la température de l'huile de la boîte de vitesses (7) et du rapport de vitesses qui est engagé.

8. Procédé de pilotage d'un pontage ou d'un dépontage dans une boîte de vitesses automatisée (7) accouplée au moteur (4) d'un véhicule automobile par un convertisseur de couple (5) comportant un dispositif de verrouillage (6) permettant de rendre l'arbre de sortie du moteur (4) solidaire de l'arbre d'entrée de la boîte de vitesses automatisée (7) pour réaliser un pontage et inversement pour réaliser un dépontage, et comportant en outre une unité de pilotage (2) du moteur adaptée pour transmettre au moteur (4) un ordre tel qu'une demande de couple et une unité de pilotage (3) de la boîte de vitesse (7) adaptée pour transmettre à l'unité de pilotage (2) du moteur un ordre tel qu'une consigne de couple, ladite demande de couple étant fonction du couple demandé par le conducteur et de ladite consigne de couple, **caractérisé en ce que** pour rendre un pontage ou un dépontage exécutable, l'unité de pilotage (3) de la boîte de vitesses compare le couple demandé par le conducteur à un couple cible et compare la différence entre le régime du moteur (4) et le régime de la turbine du convertisseur de couple à un seuil et transmet à l'unité de pilotage (2) du moteur (4) une consigne de couple pour que le couple moteur rejoigne progressivement le couple cible et que le régime du moteur (4) rejoigne progressivement celui de la turbine.

9. Procédé de pilotage d'un pontage selon la revendication 8, **caractérisé en ce qu'**il comprend les étapes suivantes :
A) l'unité de pilotage (3) de la boîte de vitesses, détermine s'il y a lieu d'opérer un pontage et si un pontage est décidé,
B) l'unité de pilotage (3) teste si le couple représentatif de la volonté du conducteur (Cc) fourni par l'unité de pilotage (2) du moteur est inférieur à un couple minimum (Couple cible pontage) et si le régime de rotation du moteur est inférieur et éloigné du régime de rotation de la turbine (régime moteur (Rm) - régime turbine (Rt) <seuil) : si le test est négatif, l'étape C est directement appliquée, sinon l'étape 1 est appliquée,
C) la commande hydraulique du pontage est lancée,
D) l'unité de pilotage (3) de la boîte de vitesses envoie à l'unité de pilotage (2) du moteur une consigne de couple (Cons) qui rejoint progressivement le couple conducteur (Cc),
E) l'unité de pilotage (3) de la boite de vitesses teste si le pontage en cours d'exécution est terminé et si la consigne de couple transmise à l'unité de pilotage (2) du moteur par l'unité de pilotage 3 de la boîte a rejoint de façon suffisamment proche le couple conducteur : si oui, le pontage est considéré comme terminé et l'unité de pilotage (3) de la boîte de vitesses teste si un nouveau pontage est demandé (retour à l'étape A : si le test est négatif, l'étape F est appliquée,
F) l'unité de pilotage (3) de la boîte de vitesses teste si le couple conducteur est inférieur au couple cible pontage : si non, l'étape D continue à s'effectuer : si oui, l'étape G est appliquée,
G) l'unité de pilotage (3) de la boîte de vitesses envoie à l'unité de pilotage (2) du moteur une consigne de couple qui rejoint progressivement le couple cible pontage,
H) l'unité de pilotage (3) de la boîte de vitesses teste si le couple conducteur est supérieur ou égal au couple cible pontage ou si le pontage est terminé : si oui, l'étape D est de nouveau appliquée pour que la consigne de couple rejoigne le couple conducteur : si non, il y a retour à l'étape G,
I) l'unité de pilotage (3) de la boîte de vitesses envoie à l'unité de pilotage (2) du moteur une consigne de couple qui rejoint progressivement le couple cible pontage,
J) l'unité de pilotage (3) de la boîte de vitesses teste si le couple conducteur est supérieur ou égal au couple cible pontage ou si le pontage est terminé : si oui, l'étape D est de nouveau appliquée pour que la consigne de couple rejoigne le couple conducteur : si non, l'étape K est appliquée,
K) l'unité de pilotage (3) de la boîte de vitesses teste si le régime de rotation du moteur est supérieur ou proche du régime de rotation de la turbine (régime moteur - régime turbine ≥ seuil), si oui, l'étape L est appliquée, sinon l'étape N est appliquée,
L) la commande hydraulique du pontage est lancée,
M) le test de l'étape K étant positif, le couple courant suffit pour que le régime moteur soit supérieur ou proche du régime turbine : le couple cible pontage est figé au couple réel fourni par le moteur et la consigne de couple rejoint progressivement le couple cible pontage,
N) l'unité de pilotage (3) de la boîte de vitesses teste si le couple moteur appliqué est égal ou proche du couple cible : si le test est négatif, on revient à l'étape I : si le test est positif, l'étape O est appliquée,
O) le couple cible est insuffisant pour ramener le régime moteur au niveau du régime turbine, (le test de l'étape K est négatif) : le couple cible initial est augmenté d'un incrément déterminé par l'unité de pilotage (3) de la boite, dépendant de plusieurs paramètres tels que la différence entre le régime moteur et le régime turbine, puis on revient à l'étape 1.

10. Procédé de pilotage d'un dépontage, selon la revendication 8, **caractérisé en ce qu'**il comprend les étapes suivantes :
a) l'unité de pilotage (3) détermine s'il y a lieu d'opérer un dépontage : si un dépontage est décidé,
b) la commande hydraulique du dépontage est lancée,
c) l'unité de pilotage (3) teste si le couple représentatif de la volonté du conducteur (Cc) fourni par l'unité de pilotage (2) du moteur est inférieur à un couple minimum, appelé Couple cible dépontage : si le test est négatif, l'étape f est directement appliquée, sinon l'étape d ci-après est appliquée,
d) l'unité de pilotage (3) de la boîte envoie à l'unité de pilotage (2) du moteur une consigne de couple qui rejoint le couple cible dépontage progressivement,
e) l'unité de pilotage (3) teste si le couple représentatif de la volonté du conducteur est supérieur ou égal au couple cible dépontage ou si le dépontage est terminé : si le test est positif, l'étape f est directement appliquée, sinon l'étape d est appliquée,
f) l'unité de pilotage (3) de la boîte envoie à l'unité de pilotage (2) du moteur une consigne de couple qui rejoint progressivement le couple conducteur, g) l'unité de pilotage (3) de la boîte de vitesses teste si le dépontage est terminé et si la consigne de couple transmise à l'unité de pilotage (2) du moteur par l'unité de pilotage (3) de la boîte a rejoint de façon suffisamment proche le couple conducteur ; si oui, le dépontage est considéré comme terminé et l'unité de pilotage (3) de la boîte de vitesses teste si un nouveau dépontage est demandé (retour à l'étape a) : si le test est négatif, l'étape e est appliquée.

## Claims

1. Device for operating an automatic gearbox (7) coupled to the engine (4) of a motor vehicle by a torque converter (5) comprising a latching device (6) making it possible to interlock the output shaft of the engine (4) and the input shaft of the automatic gearbox (7) so as to effect a lock-up and conversely to effect a release of lock-up, the device furthermore comprising an engine control unit (2) adapted for transmitting to the engine (4) an order such as a torque request and a control unit (3) for the gearbox (7) adapted for transmitting to the engine control unit (2) an order such as a torque preset, said torque request being dependent on the torque requested by the driver and on said torque preset, **characterized in that** upon lock-ups or releases of lock-up, the control unit (3) of the gearbox is adapted to compare the torque requested by the driver with a target torque and to compare the difference between the speed of the engine (4) and the speed of the turbine of the torque converter with a threshold and to transmit to the control unit (2) of the engine (4) a torque preset so that the engine torque progressively reaches the target torque and the speed of the engine (4) progressively reaches that of the turbine.

2. Operating device according to Claim 1, **characterized in that** to execute a lock-up when the speed of the turbine of the converter (5) is greater than that of the engine (4), the control unit (3) of the gearbox is adapted to transmit to the engine control unit (2) a torque preset greater than the torque requested by the driver of the vehicle so that the speed of the engine (4) becomes close to the speed of the turbine of the converter (5).

3. Operating device according to Claim 1, **characterized in that** to execute a lock-up during a rapid decrease in the torque of the engine due to a relaxing by the driver of the accelerator pedal (1), the control unit (3) of the gearbox (7) transmits to the control unit (2) of the engine a torque preset so as to slow down the rate of decrease of the torque.

4. Operating device according to Claim 1, **characterized in that** to execute a lock-up release when the engine (4) is in injection cutoff mode, the control unit (3) of the gearbox is adapted to transmit to the control unit (2) of the engine a torque preset greater than the torque requested by the driver of the vehicle so that the lock-up release does not occur while the engine is in injection cutoff mode.

5. Operating device according to Claim 1, **characterized in that** to execute a lock-up release upon a rapid decrease in the torque of the engine due to a relaxing by the driver of the accelerator pedal, the control unit (3) of the gearbox is adapted to transmit to the control unit (2) of the engine a torque preset so as to slow down the rate of decrease of the torque.

6. Operating device according to one of Claims 1 to 5, **characterized in that** the control unit (3) of the gearbox comprises means for adjusting the hydraulic pressure applied to the latching and unlatching device (6), upon the execution of the lock-ups and releases of lock-ups.

7. Operating device according to one of Claims 1 to 6, **characterized in that** the control unit (3) of the gearbox (7) is adapted to determine the target torque and the speed threshold, as a function of the speed of the turbine, of the temperature of the oil of the gearbox (7) and of the gear ratio which is engaged.

8. Method of controlling a lock-up or lock-up release in an automatic gearbox (7) coupled to the engine (4) of a motor vehicle by a torque converter (5) comprising a latching device (6) making it possible to interlock the output shaft of the engine (4) and the input shaft of the automatic gearbox (7) so as to effect a lock-up and conversely to effect a release of lock-up, and furthermore comprising an engine control unit (2) adapted to transmit to the engine (4) an order such as a torque request and a control unit (3) of the gearbox (7) adapted to transmit to the control unit (2) of the engine an order such as a torque preset, said torque request being dependent on the torque requested by the driver and on said torque preset, **characterized in that** to render a lock-up or a lock-up releaseexecutable, the control unit (3) of the gearbox compares the torque requested by the driver with a target torque and compares the difference between the speed of the engine (4) and the speed of the turbine of the torque converter with a threshold and transmits to the control unit (2) of the engine (4) a torque preset so that the engine torque progressively reaches the target torque and the speed of the engine (4) progressively reaches that of the turbine.

9. Method of controlling a lock-up according to Claim 8, **characterized in that** it comprises the following steps:
A) the control unit (3) of the gearbox determines whether there is reason to effect a lock-up and if a lock-up is decided,
B) the control unit (3) tests whether the torque representative of the desire of the driver (Cc) provided by the control unit (2) of the engine is less than a minimum torque (lock-up target torque) and whether the speed of rotation of the engine is less than and far from the speed of rotation of the turbine (engine speed (Rm) - turbine speed (Rt) <threshold): if the test is negative, step C is applied directly, otherwise step I is applied,
C) the hydraulic operation of the lock-up is instigated,
D) the control unit (3) of the gearbox sends the control unit (2) of the engine a torque preset (Cons) which progressively reaches the driver torque (Cc),
E) the control unit (3) of the gearbox tests whether the lock-up currently being executed has terminated and whether the torque preset transmitted to the control unit (2) of the engine by the control unit 3 of the box has reached sufficiently close to the driver torque: if it has, the lock-up is considered to have terminated and the control unit (3) of the gearbox tests whether a new lock-up is requested (return to step A): if the test is negative, step F is applied,
F) the control unit (3) of the gearbox tests whether the driver torque is less than the lock-up target torque: if it is not, step D continues to be performed: if it is, step G is applied,
G) the control unit (3) of the gearbox sends the control unit (2) of the engine a torque preset which progressively reaches the lock-up target torque,
H) the control unit (3) of the gearbox tests whether the driver torque is greater than or equal to the lock-up target torque or whether the lock-up has terminated: if it has, step D is again applied so that the torque preset reaches the driver torque: if it has not, there is return to step G,
I) the control unit (3) of the gearbox sends the control unit (2) of the engine a torque preset which progressively reaches the lock-up target torque,
J) the control unit (3) of the gearbox tests whether the driver torque is greater than or equal to the lock-up target torque or whether the lock-up has terminated: if it has, step D is again applied so that the torque preset reaches the driver torque: if it has not, step K is applied,
K) the control unit (3) of the gearbox tests whether the speed of rotation of the engine is greater than or close to the speed of rotation of the turbine (engine speed - turbine speed ≥ threshold), if it is, step L is applied, otherwise step N is applied,
L) the hydraulic operation of the lock-up is instigated,
M) the test of step K being positive, the current torque suffices for the engine speed to be greater than or close to the turbine speed: the lock-up target torque is pegged at the real torque provided by the engine and the torque preset progressively reaches the lock-up target torque,
N) the control unit (3) of the gearbox tests whether the engine torque applied is equal or close to the target torque: if the test is negative, we return to step I: if the test is positive, step O is applied,
O) the target torque is insufficient to bring the engine speed to the level of the turbine speed, (the test of step K is negative): the initial target torque is increased by an increment determined by the control unit (3) of the box, dependent on several parameters such as the difference between the engine speed and the turbine speed, then we return to step I.

10. Method of controlling a lock-up release according to Claim 8, **characterized in that** it comprises the following steps:
a) the control unit (3) determines whether there is reason to effect a release of lock-up: if a lock-up release is decided,
b) the hydraulic operation of the lock-up release is instigated,
c) the control unit (3) tests whether the torque representative of the desire of the driver (Cc) provided by the control unit (2) of the engine is less than a minimum torque, called lock-up release target torque: if the test is negative, step f is applied directly, otherwise step d hereinbelow is applied,
d) the control unit (3) of the box sends the control unit (2) of the engine a torque preset which reaches the lock-up release target torque progressively,
e) the control unit (3) tests whether the torque representative of the desire of the driver is greater than or equal to the lock-up release target torque or whether the lock-up release has terminated: if the test is positive, step f is applied directly, otherwise step d is applied,
f) the control unit (3) of the box sends the control unit (2) of the engine a torque preset which progressively reaches the driver torque,
g) the control unit (3) of the gearbox tests whether the lock-up release has terminated and whether the torque preset transmitted to the control unit (2) of the engine by the control unit (3) of the box has reached sufficiently close to the driver torque: if it has, the lock-up release is considered to have terminated and the control unit (3) of the gearbox tests whether a new lock-up release is requested (return to step a): if the test is negative, step e is applied.

## Patentansprüche

1. Vorrichtung zur Steuerung eines Automatikgetriebes (7), das mit dem Motor (4) eines Kraftfahrzeugs über einen Drehmomentwandler (5) gekoppelt ist, der eine Verriegelungsvorrichtung (6) aufweist, die es ermöglicht, die Abtriebswelle des Motors (4) fest mit der Antriebswelle des Automatikgetriebes (7) zu verbinden, um eine Überbrückung herzustellen und umgekehrt, um eine Überbrückung zu entfernen, wobei die Vorrichtung außerdem eine Steuereinheit (2) des Motors, die geeignet ist, um an den Motor (4) einen Befehl wie eine Drehmomentanforderung zu übertragen, und eine Steuereinheit (3) des Getriebes (7) enthält, die geeignet ist, um an die Steuereinheit (2) des Motors einen Befehl wie einen Drehmomentsollwert zu übertragen, wobei die Drehmomentanforderung von dem vom Fahrer angeforderten Drehmoment und vom Drehmomentsollwert abhängt, **dadurch gekennzeichnet, dass** bei den Überbrückungen oder beim Entfernen der Überbrückungen die Steuereinheit (3) des Getriebes geeignet ist, um das vom Fahrer angeforderte Drehmoment mit einem Zieldrehmoment zu vergleichen und die Differenz zwischen der Drehzahl des Motors (4) und der Drehzahl der Turbine des Drehmomentwandlers mit einem Schwellwert zu vergleichen, und um an die Steuereinheit (2) des Motors (4) einen Drehmomentsollwert zu übertragen, damit das Motordrehmoment progressiv das Zieldrehmoment erreicht und die Drehzahl des Motors (4) progressiv diejenige der Turbine erreicht.

2. Steuervorrichtung nach Anspruch 1, **dadurch gekennzeichnet, dass** zur Durchführung einer Überbrückung, wenn die Drehzahl der Turbine des Wandlers (5) höher ist als diejenige des Motors (4), die Steuereinheit (3) des Getriebes geeignet ist, um an die Steuereinheit (2) des Motors einen Drehmomentsollwert höher als das vom Fahrer des Fahrzeugs angeforderte Drehmoment zu übertragen, damit die Drehzahl des Motors (4) nahe der Drehzahl der Turbine des Wandlers (5) wird.

3. Steuervorrichtung nach Anspruch 1, **dadurch gekennzeichnet, dass** zur Durchführung einer Überbrückung bei einer schnellen Verringerung des Drehmoments des Motors aufgrund eines Loslassens des Gaspedals (1) durch den Fahrer die Steuereinheit (3) des Getriebes (7) an die Steuereinheit (2) des Motors einen Drehmomentsollwert überträgt, um die Verringerungsgeschwindigkeit des Drehmoments zu verlangsamen.

4. Steuervorrichtung nach Anspruch 1, **dadurch gekennzeichnet, dass** zur Durchführung des Entfernens einer Überbrückung, wenn die Einspritzung des Motors (4) unterbrochen ist, die Steuereinheit (3) des Getriebes geeignet ist, um an die Steuereinheit (2) des Motors einen Drehmomentsollwert zu übertragen, der höher ist als das vom Fahrer des Fahrzeugs angeforderte Drehmoment, damit die Entfernung der Überbrückung nicht erfolgt, wenn die Einspritzung des Motors unterbrochen ist.

5. Steuervorrichtung nach Anspruch 1, **dadurch gekennzeichnet, dass** zur Durchführung des Entfernens einer Überbrückung bei einer schnellen Verringerung des Drehmoments des Motors aufgrund eines Loslassens des Gaspedals durch den Fahrer die Steuereinheit (3) des Getriebes geeignet ist, um an die Steuereinheit (2) des Motors einen Drehmomentsollwert zu übertragen, um die Verringerungsgeschwindigkeit des Drehmoments zu verlangsamen.

6. Steuervorrichtung nach einem der Ansprüche 1 bis 5, **dadurch gekennzeichnet, dass** die Steuereinheit (3) des Getriebes Einrichtungen aufweist, um den an die Verriegelungs- und Entriegelungsvorrichtung (6) bei der Durchführung der Überbrückungen und der Entfernungen der Überbrückungen angewendeten Hydraulikdruck zu regeln.

7. Steuervorrichtung nach einem der Ansprüche 1 bis 6, **dadurch gekennzeichnet, dass** die Steuereinheit (3) des Getriebes (7) geeignet ist, um das Zieldrehmoment und den Drehzahlschwellwert in Abhängigkeit von der Drehzahl der Turbine, der Temperatur des Öls des Getriebes (7) und dem eingelegten Gang zu bestimmen.

8. Verfahren zur Steuerung einer Überbrückung oder des Entfernens einer Überbrückung in einem Automatikgetriebe (7), das mit dem Motor (4) eines Kraftfahrzeugs über einen Drehmomentwandler (5) gekoppelt ist, der eine Verriegelungsvorrichtung (6) aufweist, die es ermöglicht, die Abtriebswelle des Motors (4) fest mit der Antriebswelle des Automatikgetriebes (7) zu verbinden, um eine Überbrückung herzustellen und umgekehrt, um eine Überbrückung zu entfernen, und außerdem eine Steuereinheit (2) des Motors, die geeignet ist, um an den Motor (4) einen Befehl wie eine Drehmomentanforderung zu übertragen, und eine Steuereinheit (3) des Getriebes (7) aufweist, die geeignet ist, um an die Steuereinheit (2) des Motors einen Befehl wie einen Drehmomentsollwert zu übertragen, wobei die Drehmomentanforderung von dem vom Fahrer angeforderten Drehmoment und vom Drehmomentsollwert abhängt, **dadurch gekennzeichnet, dass**, um eine Überbrückung oder das Entfernen einer Überbrückung durchführbar zu machen, die Steuereinheit (3) des Getriebes das vom Fahrer angeforderte Drehmoment mit einem Zieldrehmoment vergleicht und die Differenz zwischen der Drehzahl des Motors (4) und der Drehzahl der Turbine des Drehmomentwandlers mit einem Schwellwert vergleicht und an die Steuereinheit (2) des Motors (4) einen Drehmomentsollwert überträgt, damit das Motordrehmoment progressiv das Zieldrehmoment erreicht und die Drehzahl des Motors (4) progressiv diejenige der Turbine erreicht.

9. Verfahren zur Steuerung einer Überbrückung nach Anspruch 8, **dadurch gekennzeichnet, dass** es die folgenden Schritte enthält:
A) die Steuereinheit (3) des Getriebes stellt fest, ob eine Überbrückung durchgeführt werden soll und ob eine Überbrückung bestimmt wurde,
b) die Steuereinheit (3) testet, ob das für den Willen des Fahrers (Cc) repräsentative Drehmoment, das von der Steuereinheit (2) des Motors geliefert wird, geringer ist als ein Mindestdrehmoment (Zieldrehmoment Überbrückung), und ob die Drehzahl des Motors geringer als und entfernt von der Drehzahl der Turbine ist (Motordrehzahl (Rm) - Turbinendrehzahl (Rt) < Schwellwert): wenn der Test negativ ist, wird direkt der Schritt C angewendet, ansonsten wird der Schritt I angewendet,
C) die Hydrauliksteuerung der Überbrückung wird gestartet,
D) die Steuereinheit (3) des Getriebes schickt an die Steuereinheit (2) des Motors einen Drehmomentsollwert (Cons), der progressiv das Fahrerdrehmoment (Cc) erreicht,
E) die Steuereinheit (3) des Getriebes testet, ob die gerade durchgeführte Überbrückung beendet ist, und ob der an die Steuereinheit (2) des Motors durch die Steuereinheit (3) des Getriebes übertragene Drehmomentsollwert das Fahrerdrehmoment nahe genug erreicht hat: wenn ja, wird die Überbrückung als beendet angesehen und die Steuereinheit (3) des Getriebes testet, ob eine neue Überbrückung angefordert wird (Rückkehr zum Schritt A): wenn der Test negativ ist, wird Schritt F angewendet,
F) die Steuereinheit (3) des Getriebes testet, ob das Fahrerdrehmoment geringer ist als das Zieldrehmoment Überbrückung: wenn nicht, wird der Schritt D weiter durchgeführt: wenn ja, wird Schritt G angewendet,
G) die Steuereinheit (3) des Getriebes schickt an die Steuereinheit (2) des Motors einen Drehmomentsollwert, der progressiv das Zieldrehmoment Überbrückung erreicht,
H) die Steuereinheit (3) des Getriebes testet, ob das Fahrerdrehmoment höher als das oder gleich dem Zieldrehmoment Überbrückung ist, oder ob die Überbrückung beendet ist: wenn ja, wird Schritt D erneut angewendet, damit der Drehmomentsollwert das Fahrerdrehmoment erreicht: wenn nein, Rückkehr zum Schritt G,
I) die Steuereinheit (3) des Getriebes schickt an die Steuereinheit (2) des Motors einen Drehmomentsollwert, der progressiv das Zieldrehmoment Überbrückung erreicht,
J) die Steuereinheit (3) des Getriebes testet, ob das Fahrerdrehmoment höher als das oder gleich dem Zieldrehmoment Überbrückung ist, oder ob die Überbrückung beendet ist: wenn ja, wird Schritt D erneut angewendet, damit der Drehmomentsollwert das Fahrerdrehmoment erreicht: wenn nein, wird Schritt K angewendet,
K) die Steuereinheit (3) des Getriebes testet, ob die Drehzahl des Motors höher als die oder nahe der Drehzahl der Turbine ist (Motordrehzahl - Turbinendrehzahl ≥ Schwellwert), wenn ja, wird Schritt L angewendet, sonst wird Schritt N angewendet,
L) die Hydrauliksteuerung der Überbrückung wird gestartet,
M) wenn der Test des Schritts K positiv ist, genügt das laufende Drehmoment, damit die Motordrehzahl höher als die oder gleich der Turbinendrehzahl ist: das Zieldrehmoment Überbrückung wird auf dem realen Drehmoment eingefroren, das vom Motor geliefert wird, und der Drehmomentsollwert erreicht progressiv das Zieldrehmoment Überbrückung,
N) die Steuereinheit (3) des Getriebes testet, ob das angewendete Motordrehmoment gleich oder nahe dem Zieldrehmoment ist: wenn der Test negativ ist, Rückkehr zu Schritt I: wenn der Test positiv ist, wird Schritt O angewendet,
O) das Zieldrehmoment ist nicht ausreichend, um die Motordrehzahl auf den Pegel der Turbinendrehzahl zurückzubringen, (der Test des Schritts K ist negativ): das Anfangs-Zieldrehmoment wird um ein durch die Steuereinheit (3) des Getriebes festgelegtes Inkrement erhöht, das von mehreren Parametern wie der Differenz zwischen der Motordrehzahl und der Turbinendrehzahl abhängt, dann Rückkehr zum Schritt I.

10. Verfahren zur Steuerung des Entfernens einer Überbrückung nach Anspruch 8, **dadurch gekennzeichnet, dass** es die folgenden Schritte enthält:
a) die Steuereinheit (3) stellt fest, ob es notwendig ist, das Entfernen einer Überbrückung durchzuführen: wenn das Entfernen einer Überbrückung bestimmt wird,
b) wird die Hydrauliksteuerung des Entfernens der Überbrückung gestartet,
c) die Steuereinheit (3) testet, ob das für den Willen des Fahrers (Cc) repräsentative Drehmoment, das von der Steuereinheit (2) des Motors geliefert wird, niedriger ist als ein Mindestdrehmoment, Zieldrehmoment des Entfernens der Überbrückung genannt: wenn der Test negativ ist, wird direkt Schritt f angewendet, sonst wird der nachfolgende Schritt d angewendet,
d) die Steuereinheit (3) des Getriebes schickt an die Steuereinheit (2) des Motors einen Drehmomentsollwert, der das Zieldrehmoment des Entfernens der Überbrückung progressiv erreicht,
e) die Steuereinheit (3) testet, ob das für den Willen des Fahrers repräsentative Drehmoment höher als das oder gleich dem Zieldrehmoment des Entfernens der Überbrückung ist, oder ob das Entfernen der Überbrückung beendet ist: wenn der Test positiv ist, wird direkt Schritt f angewendet, sonst wird Schritt d angewendet,
f) die Steuereinheit (3) des Getriebes sendet an die Steuereinheit (2) des Motors einen Drehmomentsollwert, der progressiv das Fahrerdrehmoment erreicht,
g) die Steuereinheit (3) des Getriebes testet, ob das Entfernen der Überbrückung beendet ist und ob der von der Steuereinheit (3) des Getriebes an die Steuereinheit (2) des Motors übertragene Drehmomentsollwert das Fahrerdrehmoment ausreichend nahe erreicht hat: wenn ja, wird das Entfernen der Überbrückung als beendet angesehen und die Steuereinheit (3) des Getriebes testet, ob ein neues Entfernen der Überbrückung angefordert wird (Rückkehr zum Schritt a): wenn der Test negativ ist, wird Schritt e angewendet.
